# EUROPEAN PATENT SPECIFICATION

(11) **EP 2 402 244 B1**
(45) Date of publication and mention of the grant of the patent: **29.10.2014**
(21) Application number: 11168636.6
(22) Date of filing: 03.06.2011
(51) Int. Cl.: B62M 7/12, B62K 11/10

(54) **Rear-arm connection structure of motorcycle**
Hinterarmverbindungsstruktur eines Motorrads
Structure de connexion de bras arrière de motocyclette

(30) Priority: 29.06.2010 TW 099121327
(43) Date of publication of application: 04.01.2012
(73) Proprietor: Kwang Yang Motor Co., Ltd., 807 Kaohsiung (TW)
(72) Inventor: Kuo, Wei-hsin, 807 Kaohsiung City (TW); Pu, Chun-hung, 833 Kaohsiung City (TW)
(74) Representative: Schweiger, Martin

(56) References cited:
- EP-A1- 1 577 207
- EP-A2- 1 186 527

## Description

### FIELD OF THE INVENTION

The present invention relates to a rear-arm connection structure of a motorcycle, and more particularly to a rear-arm connection structure of a motorcycle, which can stably connect the rear swing arm of a transmission mechanism to an engine.

### BACKGROUND OF THE INVENTION

Nowadays, the installation between an engine and a transmission mechanism of a rear wheel of a scooter type motorcycle can be classified into two types: the first type is the one-piece swing arm structure, in which the engine and the transmission mechanism of the rear wheel are integrated into one piece, so that the combination of the engine and the transmission mechanism of the rear wheel will simultaneously swing about a predetermined pivotal angle in relation to a body frame during the motorcycle moves forward and a rear shock absorber causes a push-and-pull function. However, the disadvantage of the first type is that: the total weight of the pivotal portion between the combination and the body frame is heavier, resulting in easily increasing the loading of the rear shock absorber and affecting the operation of the engine. On the other hand, the second type is the swing arm structure of only transmission mechanism, in which the engine is directly mounted on the body frame, and only a swing arm of the transmission mechanism can pivotally swing about a predetermined pivotal angle in relation to the engine and the body frame. The advantage of the second type is that: the total weight of the pivotal portion between the swing arm of the transmission mechanism and the engine is lighter, so that the loading of the rear shock absorber can be reduced without affecting the operation of the engine. Therefore, the swing arm of the transmission mechanism gradually becomes one of important design concepts of scooter type motorcycles.

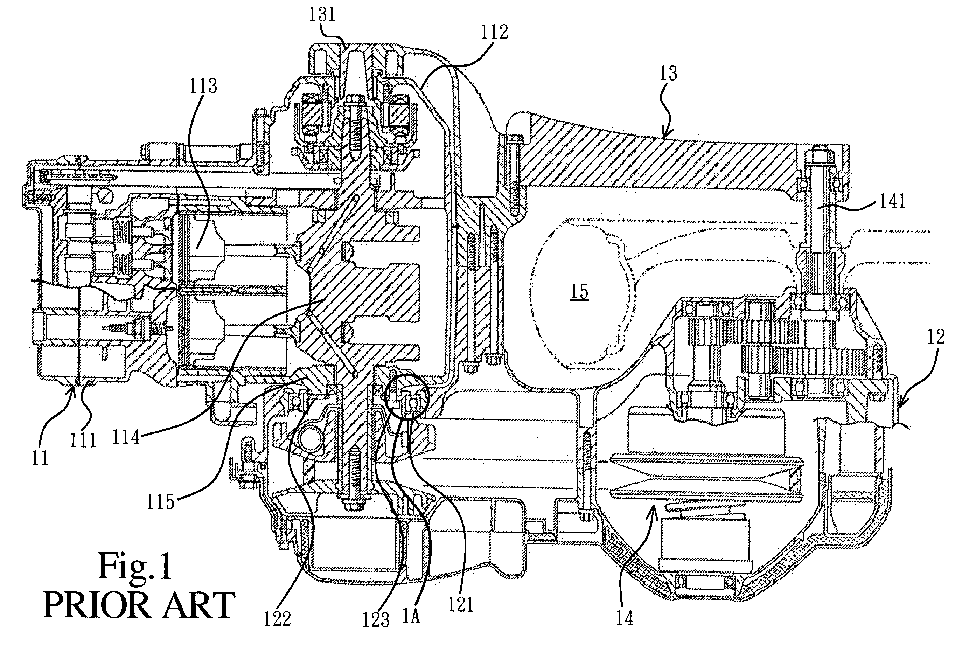

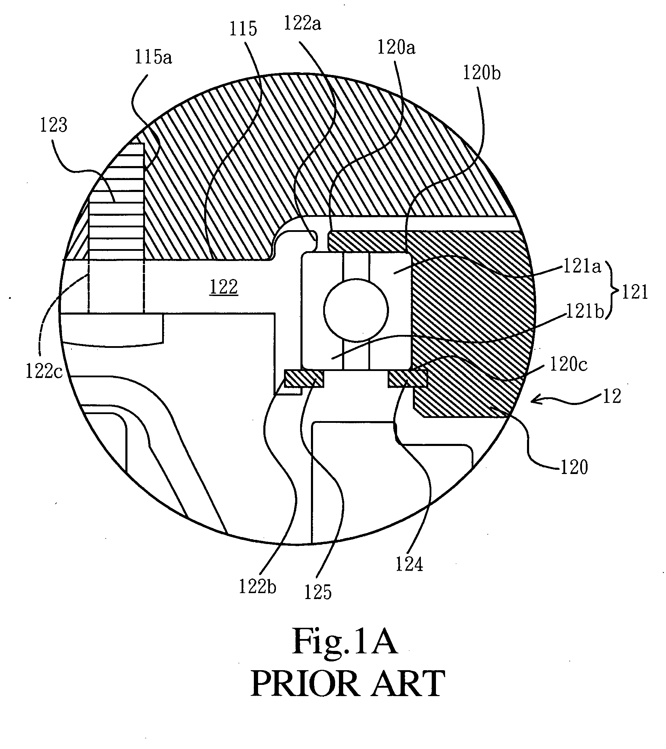

For example, Document EP 1186527 which is a family member of document Taiwan Pat. No. 509192 discloses a traditional rear wheel suspension structure in a motorcycle, which is belonged to the second type (i.e. a swing arm of a transmission mechanism). As shown in Fig. 1, the traditional rear wheel suspension structure comprises an engine 11, a first rear swing arm 12, a second rear swing arm 13, a transmission mechanism 14 and a rear wheel 15. The engine 11 has a cylinder head 111 and a crankcase 112, wherein the cylinder head 111 is provided with a plurality of pistons 113 therein, and the crankcase 112 is provided with a crankshaft 114 therein. The pistons 113 are linked to the crankshaft 114 for actuating the crankshaft 114 to rotate. One end of the crankshaft 114 is extended out of the crankcase 112 and extended into the first rear swing arm 12. The first rear swing arm 12 is pivotally connected to a ring-like support member 122 through a ball bearing with a considerable diameter, and the support member 122 is mounted on a connection wall 115 on one side of the crankcase 112 by a plurality of screws 123. The support member 122 has a through hole (un-labeled) through which one end of the crankshaft 114 can pass in a contactless manner. The second rear swing arm 13 is pivotally connected to the other side of the crankcase 112 by a pivot 131. Moreover, the transmission mechanism 14 is installed in the first rear swing arm 12 for changing speed of the rotation power transmitted from one end of the crankshaft 114 and then transmitting the changed rotation power to an axle 141, so that the axle 141 can drive the rear wheel to rotate and the motorcycle thus can move forward.

Referring now to Fig. 1A, a partially enlarged view of a connection structure between the crankcase 112 and the first rear swing arm 12 is illustrated, wherein the connection wall 115 of the crankcase 112 has a plurality of thread holes 115a, and the first rear swing arm 12 includes a housing 120 which is formed with an installation hole 120a, a bearing recess 120b and an annular groove 120c. The ball bearing 121 includes an outer ring 121 a and an inner ring 121 b. The support member 122 has a clamping flange 122a, an annular groove 122b and a plurality of openings 122c. In installation, the outer ring 121 a of the ball bearing 121 is firstly in tight contact with an inner wall of the bearing recess 120b, and then a C-shape clip ring 124 is engaged in the annular groove 120c on the inner wall of the bearing recess 120b for positioning the ball bearing 121. Furthermore, the support member 122 is loosely engaged against the inner ring 121 b of the ball bearing 121, and the clamping flange 122a of the support member 122 abuts against one end surface of the inner ring 121b, wherein another C-shape clip ring 125 is engaged in the annular groove 122b on the inner wall of the support member 122. After this, the housing 120 of the first rear swing arm 12 is moved toward and close to the connection wall 115 of the crankcase 112, and one end of the crankshaft 114 can pass through the through hole (un-labeled) of the support member 122 in a contactless manner. Finally, the screws 123 pass through the openings 122c of the support member 122 to be screw-connected to the thread holes 115a of the connection wall 115, so that the support member 122 is mounted on the crankcase 112. Thus, the outer ring 121 a of the ball bearing 121 can rotate in relation to the inner ring 121 b thereof, and the first rear swing arm 12 can pivotally rotate about a predetermined angle in relation to the crankcase 112.

However, there are some problems existing in the actual use of the traditional connection structure between the crankcase 112 and the first rear swing arm 12, as follows: Because there is a certain allowance of an axial gap between the axial thickness of the C-shape clip ring 125 and the axial width of the annular groove 122b on the inner wall of the support member 122, while there is another certain allowance of an axial gap between the axial thickness of the inner ring 121 b of the ball bearing 121 and the distance between the C-shape clip ring 125 and the clamping flange 122a. As a result, during the motorcycle moves forward, the allowances of the foregoing two axial gaps will easily cause that the first rear swing arm 12 shakes rightward and leftward during swinging upward and downward. If the motorcycle moves at a high speed, the shakes and vibrations may become more serious, so that a motorcycle rider can not stably control the motorcycle, resulting in increasing the risk of traffic accidents. In addition, after being used in a long time, the long term shakes and vibrations also cause the abrasion and gradual thinning of the C-shape clip ring 125, so that the size of the allowance of the axial gap may be enlarged and the problem of shakes and vibrations may be more serious.

As a result, it is necessary to provide a rear-arm connection structure of a motorcycle to solve the problems existing in the conventional technologies, as described above.

As a result, it is necessary to provide a rear-arm connection structure of a motorcycle to solve the problems existing in the conventional technologies, as described above.

### SUMMARY OF THE INVENTION

A primary object of the present invention is to provide a rear-arm connection structure of a motorcycle, which includes at least two support members to commonly define an axial space to form the clamping portion, so as to tightly clamp two end surfaces of an inner ring of a bearing. Because the allowance of an axial gap between the clamping portion and the inner ring can be reduced to a minimum value, the pivotal installation reliability and the swing stability between the rear swing arm and an engine can be efficiently enhanced, and the controllability of the motorcycle can be improved.

A secondary object of the present invention is to provide a rear-arm connection structure of a motorcycle, wherein the clamping portion of the at least two support members are used to clamp the two end surfaces of the inner ring of the bearing and thus the support members needs not a C-shape clip ring, while each of the support members has sufficient thickness to provide a better mechanical strength to reduce the abrasion or deformation. Thus, it is advantageous to increase the connection strength and lift time of the rear-arm connection structure.

To achieve the above object, the present invention provides a rear swing arm for a motorcycle, with a swing housing having a rear-arm connection structure for pivotally connecting the swing housing to a crankcase of an engine, comprising a bearing having an outer ring mounted on a bearing recess of the swing housing and an inner ring, characterized in that: the rear-arm connection structure further comprises:
at least two support members commonly defining a clamping portion, a pathway and a plurality of positioning portions, wherein the clamping portion tightly clamps two end surfaces of the inner ring of the bearing, the pathway allows a transmission shaft of the crankcase to pass therethrough in a contactless manner, and the positioning portions are formed between the clamping portion and the pathway; and
a plurality of positioning members passing through the positioning portions, respectively, for mounting the support members onto a connection wall of the crankcase, so that the swing housing of the rear swing arm is pivotally connected to the crankcase of the engine.

In one embodiment of the present invention, the at least two support members comprises a first support member and a second support member, each of the first and second support members has one end surface which is radially extended outward to form a clamping flange, and the two clamping flanges of the first and second support members commonly define the clamping portion.

In one embodiment of the present invention, the at least two support members comprises a first support member and a second support member, the first support member has one end surface or outer peripheral surface which is radially extended outward to form a clamping flange, the second support member has one side which is close to the first support member and has a clamping edge surface, and the clamping flange and the clamping edge surface commonly define the clamping portion.

In one embodiment of the present invention, the at least two support members comprises a first support member, a second support member and a third support member, the second support member is sandwiched between the first and third support members, each of the first and third support members has one opposite side having a clamping edge surface, the second support member has an outer peripheral surface matched with an inner peripheral surface of the inner ring of the bearing, and the two clamping edge surfaces and the outer peripheral surface commonly define the clamping portion.

In one embodiment of the present invention, each of the at least two support members has a through hole, and all of the through holes commonly define the pathway.

In one embodiment of the present invention, each of the at least two support members has a plurality of positioning holes, and all of the positioning holes commonly define the positioning portions.

In one embodiment of the present invention, the positioning members are selected from screws.

In one embodiment of the present invention, each of the at least two support members has one contact surface opposite to each other, each of the contact surfaces is formed with a hollow recessed portion, and the positioning portions are a plurality of hole columns.

In one embodiment of the present invention, the transmission shaft is a crankshaft or an output shaft.

In one embodiment of the present invention, the swing housing of the rear swing arm is installed with a power transmission mechanism therein, and the power transmission mechanism is linked to one end of the transmission shaft.

In one embodiment of the present invention, the power transmission mechanism is selected from at lease one of a belt type transmission mechanism, a chain type transmission mechanism, a gear type transmission mechanism and a shaft type transmission mechanism.

In one embodiment of the present invention, the rear swing arm having the power transmission mechanism is installed on a left side, a right side or both sides of a motorcycle.

### DESCRIPTION OF THE DRAWINGS

Fig. 1 is a cross-sectional view of a traditional rear wheel suspension structure in a motorcycle;
Fig. 1A is a partially enlarged view of a connection structure between a crankcase and a first rear swing arm;
Fig. 2 is an assembled cross-sectional view of a rear-arm connection structure of a motorcycle according to a first embodiment of the present invention;
Fig. 2A is a partially enlarged view of the rear-arm connection structure in Fig. 2;
Fig. 2B is a partially cross-sectional and perspective view of the rear-arm connection structure according to the first embodiment of the present invention;
Fig. 3A is another cross-sectional view of the rear-arm connection structure of the motorcycle according to the present invention;
Fig. 3B is still another cross-sectional view of the rear-arm connection structure of the motorcycle according to the present invention;
Fig. 4 is an exploded cross-sectional view of a rear-arm connection structure according to a second embodiment of the present invention;
Fig. 5 is an exploded cross-sectional view of a rear-arm connection structure according to a third embodiment of the present invention; and
Fig. 6 is an exploded cross-sectional view of a rear-arm connection structure according to a fourth embodiment of the present invention.

### DETAILED DESCRIPTION OF THE PREFERRED EMBODIMENTS

The structure and the technical means adopted by the present invention to achieve the above and other objects can be best understood by referring to the following detailed description of the preferred embodiments and the accompanying drawings. Furthermore, directional terms described by the present invention, such as upper, lower, front, back, left, right, inner, outer, side, longitudinal/vertical, transverse/horizontal, and etc., are only directions by referring to the accompanying drawings, and thus the used directional terms are used to describe and understand the present invention, but the present invention is not limited thereto.

Referring now to Fig. 1, an assembled cross-sectional view of a rear-arm connection structure of a motorcycle according to a first embodiment of the present invention is illustrated, wherein a connection structure 20 is mainly applied to a scooter type motorcycle having a swing arm of a transmission mechanism for pivotally connecting a swing housing 31 of a rear swing arm 30 onto a crankcase 41 of an engine 40. The connection structure 20 comprises: a bearing 21, at least two support members 22 and a plurality of positioning members 23. In the present invention, each of components of the connection structure 20 will be described more detailed hereinafter by referring to the following embodiments and accompanying drawings. Moreover, some components, such as the crankcase 41 of the engine 40 or internal components in the swing housing 31 of the rear swing arm 30, are substantially similar to that of the traditional engine 11 and the first rear swing arm 12 as shown in Figs. 1 and 1A. Meanwhile, other components of the motorcycle are also similar to that of the traditional second rear swing arm 13, the transmission mechanism 14 and the rear wheel 15 as shown in Figs. 1 and 1A. Thus, these similar components will not be repetitively described hereinafter except for the differences therebetween.

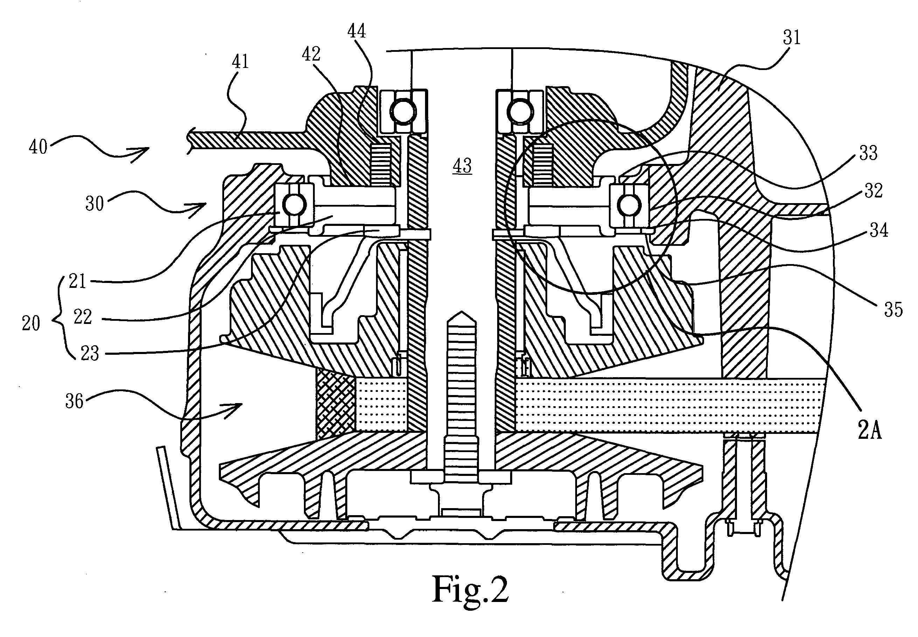

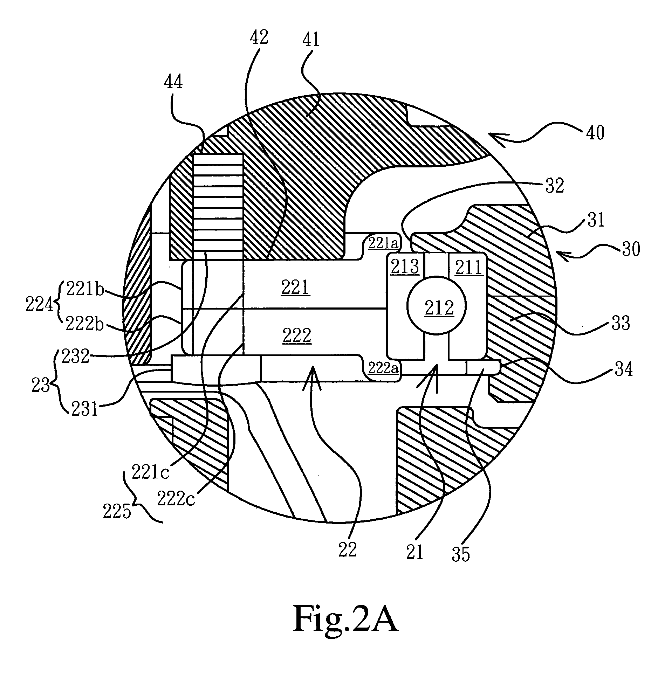

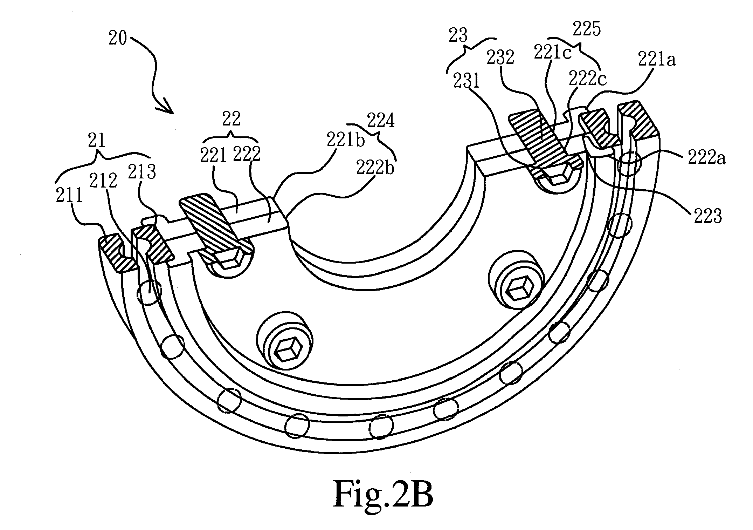

Referring now to Figs. 2, 2A and 2B, in the first embodiment of the present invention, the bearing 21 is preferably selected from a ball bearing with a considerable diameter, wherein the bearing 21 has an outer ring 211, a plurality of balls 212 and an inner ring 213. The outer ring 211 and the inner ring 213 are rings with different diameters and made of metal material, wherein the outer ring 211 and the inner ring 213 are disposed at an outer side and an inner side of the balls 212, respectively. The balls 212 are rotatably sandwiched between the outer ring 211 and the inner ring 213. The outer ring 211 has an outer peripheral surface which can be tightly matched with and engaged into a bearing recess 32 in the swing housing 31 of the rear swing arm 30. The bearing recess 32 is a step-like space which is annular and formed on a position close to an installation hole 33 of the swing housing 31. An inner diameter of the bearing recess 32 is equal to or slightly smaller than an outer diameter of the outer ring 211, so that the outer ring 211 can be tightly matched with the bearing recess 32. Furthermore, an inner wall of the bearing recess 32 is further formed with an annular groove 34 which allows a C-shape clip ring 35 to be engaged therein. Thus, two end surfaces of the outer ring 211 are clamped between the C-shape clip ring 35 and a step-like surface of the bearing recess 32, so that the outer ring 211 is stably mounted on the bearing recess 32.

Referring now to Figs. 2, 2A and 2B, in the first embodiment of the present invention, the at least two support members 22 are exemplified by a first support member 221 and a second support member 222, wherein the first and second support members 221, 222 are annular elements made of metal material and formed by casting, forging or machining, so that both of them have symmetrical shape and size to be matched with each other and have sufficient mechanical strength. As shown in Fig. 2A, the first support member 221 is relatively close to the crankcase 41 at the side of the engine 40, while the second support member 222 is relatively close to the swing housing 31 of the rear swing arm 30. In the embodiment, the term "radial" means the diameter direction of the support members 22 (i.e. the horizontal direction of Fig. 2A), while the term "axial" means the shaft extending direction of the support members 22 (i.e. the vertical direction of Fig. 2A) and the shaft extending direction of the transmission shaft 43. The first and second support members 221, 222 commonly define a clamping portion 223, a pathway 224 and a plurality of positioning portions 225. In the embodiment, the first support member 221 has one end surface which is relatively close to the side of the engine 40 and radially extended outward to form a clamping flange 221 a. Meanwhile, the second support member 222 has one end surface which is relatively close to the side of the rear swing arm 30 and radially extended outward to form another clamping flange 222a. Furthermore, the opposite contact surfaces of the first and second support members 221, 222 have the same area and can be completely in contact with each other.

Referring now to Figs. 2A and 2B, an axial gap is formed between the two clamping flanges 221 a, 222a for defining the space configuration of the clamping portion 222. The axial gap of the clamping portion 222 is designed to be equal to or slightly smaller than an axial thickness of two end surfaces of the inner ring 213. Thus, the clamping portion 222 can tightly clamp the two end surfaces of the inner ring 213, so that the inner ring 213 can be stably positioned in the clamping portion 222. In addition, each of the first and second support members 221, 222 is formed with a through hole 221 b, 222b at a center thereof, wherein the through holes 221 b, 222b commonly define the pathway 224. The pathway 224 is a cylindrical hole which allows one end of a transmission shaft 43 extended from the crankcase 41 to pass through. The inner diameter (i.e. bore) of the pathway 224 is apparently greater than the diameter of the transmission shaft 43, so that the transmission shaft 43 will not be in contact with the inner wall of the pathway 224. In addition, each of the first and second support members 221, 222 is formed with a plurality of positioning holes 221 c, 222c corresponding to each other, wherein the positioning holes 221 c, 222c commonly define the positioning portions 225. Each of the positioning holes 221 c, 222c are preferably an opening, and thus each of the commonly defined positioning portions 225 has a configuration of a cylindrical hole. The positioning portions 225 are formed between the clamping portions 223 and the pathway 224, and the positioning portions 225 are equidistantly arranged around the pathway 224.

Referring now to Figs. 2A and 2B, in the first embodiment of the present invention, the positioning members 23 are preferably selected from screws, wherein the number of the positioning members 23 is corresponding to that of the positioning portions 225 of the support members 22, while the crankcase 41 has a connection wall 42 which can be tightly adjacent to the end surface of the first support member 221. The connection wall 42 is formed with a plurality of mounting holes 44, wherein the positions and number of the mounting holes 44 are corresponding to that of the positioning portions 225. In addition, each of the positioning members 23 has a head portion 231 and a rod portion 232, wherein the head portion 231 is generally disposed at the end surface of the second support member 222. The rod portion 232 can insert into the end surface of the second support member 222 and extend out of the end surface of the first support member 221, so that the rod portion 232 is finally screw-connected into the mounting hole 44 on the connection wall 42.

Referring to Figs. 2, 2A and 2B again, in the first embodiment of the present invention, when the connection structure 20 is used to help the swing housing 31 of the rear swing arm 30 to pivotally connect onto the crankcase 41 of the engine 40, the outer ring 211 of the bearing 21 is firstly in tight contact with the inner wall of the bearing recess 33, and then the C-shape clip ring 35 is engaged in the annular groove 34 on the inner wall of the bearing recess 33, so as to position the bearing 21. After this, the clamping portion 223 defined by the first and second support members 221, 222 of the support members 22 is matched and connected with the inner ring 213 of the bearing 21, wherein the clamping flanges 221 a of the first support member 221 abuts against one end surface of the inner ring 213, while the clamping flanges 222a of the second support member 222 abuts against the other end surface of the inner ring 213. Then, the swing housing 31 of the rear swing arm 30 is placed tightly close to the connection wall 42 of the crankcase 41, and one end of the transmission shaft 43 passes through the pathway 224 of the support members 22 in a contactless manner. Finally, the positioning members 23 pass through the positioning portions 225 of the support members 22 to screw-connect into the mounting hole 44 on the connection wall 42, so that the support members 22 can be mounted on the crankcase 41. Thus, the outer ring 211 of the ball bearing 21 can rotate in relation to the inner ring 213 thereof, and the rear swing arm 30 can pivotally rotate about a predetermined angle (such as ranged between 5 and 60 degree) in relation to the crankcase 41 of the engine 40.

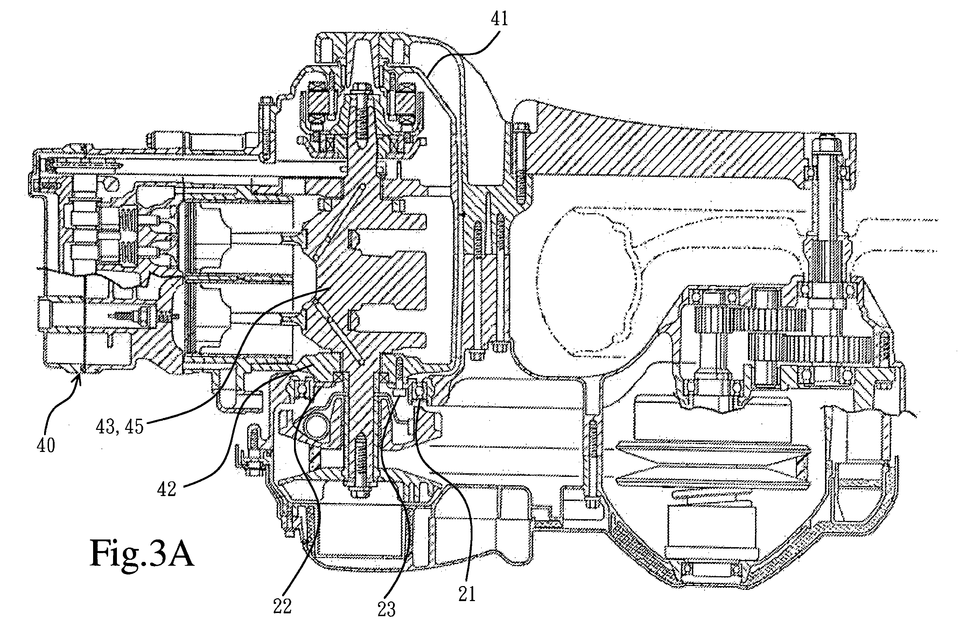

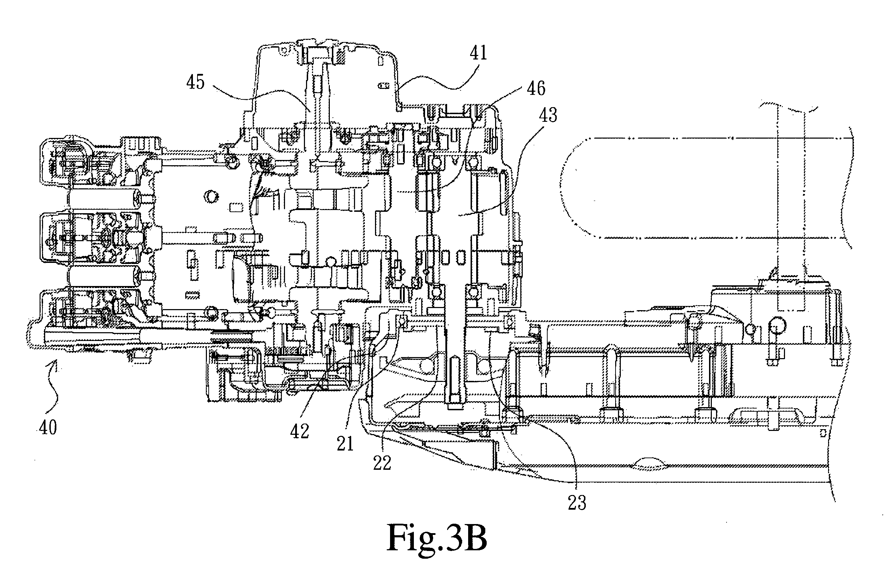

Moreover, referring now to Figs. 3A and 3B, cross-sectional views of the rear-arm connection structure of the motorcycle according to the present invention are illustrated. As shown in Fig. 3A, in the present invention, the transmission shaft 43 can be a crankshaft 45 which means a rotation shaft directly actuated by pistons in the engine 40 to rotate. Alternatively, as shown in Fig. 3B, in the present invention, the transmission shaft 43 can be an output shaft, wherein the output shaft means a rotation shaft for outputting rotation power after the rotation speed of a crankshaft 45 in the crankcase 41 is reduced through a speed reduction mechanism 46. In addition, the swing housing 31 of the rear swing arm 30 is provided with a power transmission mechanism 36 therein, wherein the power transmission mechanism 36 is linked to one end of the transmission shaft 43 extended into the swing housing 31. The power transmission mechanism 36 can be selected from a belt type transmission mechanism (as shown in Fig. 3A), but also can be selected from at lease one of a chain type transmission mechanism, a gear type transmission mechanism and a shaft type transmission mechanism. Besides, the rear swing arm 30 having the power transmission mechanism 36 is installed on a left side or a right side of a motorcycle, or also can be installed on both sides of a motorcycle, all of which are possible embodiments.

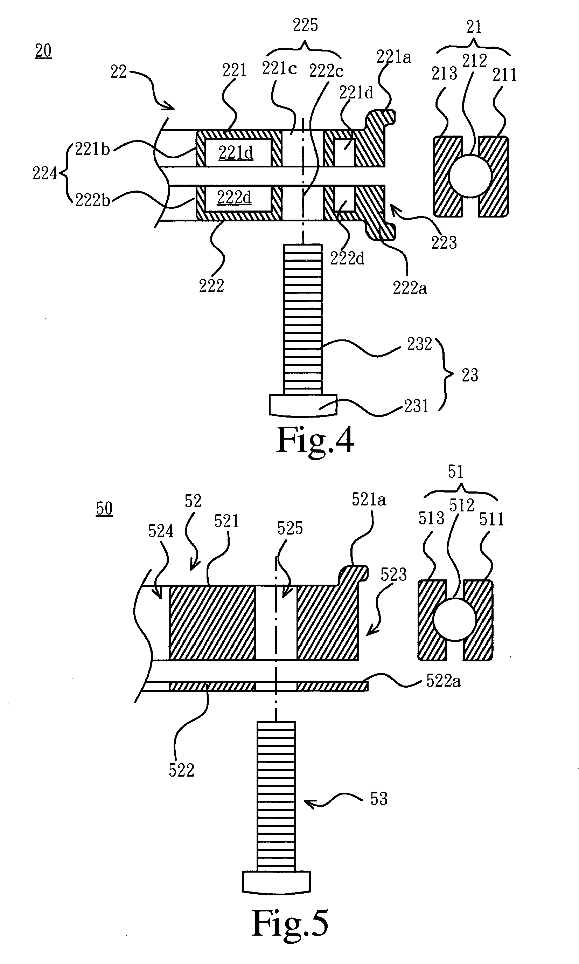

Referring now to Fig. 4, an exploded cross-sectional view of a rear-arm connection structure of a motorcycle according to a second embodiment of the present invention is illustrated, wherein the second embodiment is similar to the first embodiment, so that the second embodiment uses similar terms or numerals of the first embodiment. As shown, the difference of the second embodiment is that; according to the connection structure 20 of the second embodiment, each of the first and second support members 221, 222 has one contact surface opposite to each other, each of the contact surfaces is formed with a hollow recessed portion 221 d, 222d, wherein the hollow recessed portions 221 d, 222d are not extended to positions of the through holes 221 b, 222b, the positioning holes 221 c, 222c and the two clamping flanges 221 a, 222a. Thus, the configuration of the positioning portions 225 defined by the positioning holes 221 c, 222c are a plurality of hole columns. Other structures of the connection structure 20 of the second embodiment is substantially the same as that of the first embodiment.

Referring now to Fig. 5, an exploded cross-sectional view of a rear-arm connection structure of a motorcycle according to a third embodiment of the present invention is illustrated, wherein the third embodiment is similar to the first embodiment, so that the third embodiment uses similar terms or numerals of the first embodiment. As shown, the difference of the third embodiment is that; a connection structure 50 of the third embodiment comprises a bearing 51, a first support member 521, a second support member 522 and a plurality of positioning members 53, wherein the bearing 51 has an outer ring 511, a plurality of balls 512 and an inner ring 513. The first support member 521 and the second support member 522 are commonly called "support members 52", wherein the first and second support members 521, 522 are annular elements made of metal material and formed by casting, forging or machining, while both of them have unsymmetrical shape and size and have sufficient mechanical strength. The first support member 521 is relatively close to the crankcase 41 at the side of the engine 40, while the second support member 522 is relatively close to the swing housing 31 of the rear swing arm 30 (as shown in Fig. 2), but not limited thereto (i.e. the positions of both of them can be interchanged).

In the embodiment, the first and second support members 521, 522 commonly define a clamping portion 523, a pathway 524 and a plurality of positioning portions 525. The first support member 521 has one end surface (or outer peripheral surface) which is relatively close to the side of the engine 40 and radially extended outward to form a clamping flange 521 a. Meanwhile, the second support member 522 has one side which is close to the first support member 521 and has a clamping edge surface 522a. Contact surfaces of the first and second support members 521, 522 have the same area and are completely in contact with each other. After both of them are in contact with each other, the clamping flange 521 a and the clamping edge surface 522a commonly define an axial gap to form a clamping portion 523. In addition, each of the first and second support members 521, 522 is formed with a through hole at a center thereof, wherein the through holes thereof commonly define the pathway 524 which allows one end of a transmission shaft 43 to pass through in a contactless manner (as shown in Fig. 2). In addition, each of the first and second support members 521, 522 have a plurality of positioning holes corresponding to each other, wherein the positioning holes commonly define the positioning portions 525 through which the positioning members 53 can pass.

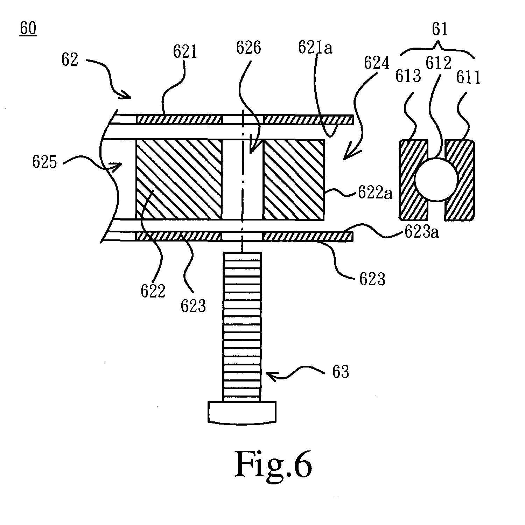

Referring now to Fig. 6, an exploded cross-sectional view of a rear-arm connection structure of a motorcycle according to a fourth embodiment of the present invention is illustrated, wherein the fourth embodiment is similar to the third embodiment, so that the fourth embodiment uses similar terms or numerals of the first embodiment. As shown, the difference of the fourth embodiment is that; a connection structure 60 of the fourth embodiment comprises a bearing 61, a first support member 621, a second support member 622, a third support member 623 and a plurality of positioning members 63, wherein the bearing 61 has an outer ring 611, a plurality of balls 612 and an inner ring 613. The first support member 621, the second support member 622 and the third support member 623 are commonly called "support members 62", wherein the first and third support members 621, 623 have symmetrical shape and size, but the shape and size of the second support member 622 is different from that of the first and third support members 621, 623. All of the support members 62 are annular elements made of metal material and formed by casting, forging or machining, and have sufficient mechanical strength. The first support member 621 is relatively close to the crankcase 41 at the side of the engine 40, while the third support member 623 is relatively close to the swing housing 31 of the rear swing arm 30 (as shown in Fig. 2), but not limited thereto (i.e. the positions of both of them can be interchanged). The second support member 622 is sandwiched between the first and third support members 621, 623.

In the embodiment, the first, second and third support members 621, 622, 623 commonly define a clamping portion 624, a pathway 625 and a plurality of positioning portions 626. The first support member 621 has one side which is relatively close and opposite to the side of the third support member 623 and has a clamping edge surface 621 a. Meanwhile, the third support member 623 has one side which is close and opposite to the first support member 621 and has a clamping edge surface 623a. The second support member 622 has an outer peripheral surface 622a matched with an inner peripheral surface of the inner ring 613 of the bearing 61. Contact surfaces of the first, second and third support members 621, 622, 623 are completely in contact with each other. After all of them are in contact with each other, the two clamping edge surfaces 621 a, 623a and the outer peripheral surface 622a commonly define an axial gap to form a clamping portion 624. In addition, each of the first, second and third support members 621, 622, 623 is formed with a through hole at a center thereof, wherein the through holes thereof commonly define the pathway 625 which allows one end of a transmission shaft 43 to pass through in a contactless manner (as shown in Fig. 2). In addition, each of the first, second and third support members 621, 622, 623 have a plurality of positioning holes corresponding to each other, wherein the positioning holes commonly define the positioning portions 626 through which the positioning members 63 can pass.

As described above, in comparison with the traditional rear wheel suspension structure which has a single support member using a C-shape clip ring to clamp an inner ring of a ball bearing and thus causes an allowance of an axial gap and the problem of shaking rightward and leftward, the rear-arm connection structure 20 of the present invention as shown in Figs. 2 to 6 includes the at least two support members 22 to commonly define an axial space to form the clamping portion 223 , so as to tightly clamp two end surfaces of the inner ring 213 of the bearing 21. Because the allowance of an axial gap between the clamping portion 223 and the inner ring 213 can be reduced to a minimum value, the pivotal installation reliability and the swing stability between the rear swing arm 30 and the engine 40 can be efficiently enhanced, and the controllability of the motorcycle can be improved.

Moreover, in the present invention, the clamping portion 223 of the at least two support members 22 are used to clamp the two end surfaces of the inner ring 213 of the bearing 21, and thus the support members 22 needs not a C-shape clip ring, while each of the support members 22 has sufficient thickness to provide a better mechanical strength to reduce the abrasion or deformation. Thus, it is advantageous to increase the connection strength and lift time of the rear-arm connection structure 20.

The present invention has been described with a preferred embodiment thereof and it is understood that many changes and modifications to the described embodiment can be carried out without departing from the scope of the invention that is intended to be limited only by the appended claims.

## Claims

1. A rear swing arm (30) for a motorcycle, with a swing housing (31) having a rear-arm connection structure (20) for pivotally connecting the swing housing (31) to a crankcase (41) of an engine (40), comprising a bearing (21) having an outer ring (211) mounted on a bearing recess (32) of the swing housing (31) and an inner ring (213), **characterized in that**: the rear-arm connection structure (20) further comprises:
at least two support members (22) commonly defining a clamping portion (223), a pathway (224) and a plurality of positioning portions (225), wherein the clamping portion (223) tightly clamps two end surfaces of the inner ring (213) of the bearing (21), the pathway (224) allows a transmission shaft (43) of the crankcase (41) to pass therethrough in a contactless manner, and the positioning portions (225) are formed between the clamping portion (223) and the pathway (224); and
a plurality of positioning members (23) passing through the positioning portions (225), respectively, for mounting the support members (22) onto a connection wall (42) of the crankcase (41), so that the swing housing (31) of the rear swing arm (30) is pivotally connected to the crankcase (41) of the engine (40).

2. The rear swing arm (30) for a motorcycle according to Claim 1, wherein the at least two support members (22) comprises a first support member (221) and a second support member (222), each of the first and second support members (221,222) has one end surface which is radially extended outward to form a clamping flange (221a,222a), and the two clamping flanges (221 a,222a) of the first and second support members (221,222) commonly define the clamping portion (223).

3. The rear swing arm (30) for a motorcycle according to Claim 1, wherein the at least two support members (52) comprises a first support member (521) and a second support member (522), the first support member (521) has one end surface or outer peripheral surface which is radially extended outward to form a clamping flange (521 a), the second support member (522) has one side which is close to the first support member (521) and has a clamping edge surface (522a), and the clamping flange (521 a) and the clamping edge surface (522a) commonly define the clamping portion (523).

4. The rear swing arm (30) for a motorcycle according to Claim 1, wherein the at least two support members (62) comprises a first support member (621), a second support member (622) and a third support member (623), the second support member (622) is sandwiched between the first and third support members (621,623), each of the first and third support members (621,623) has one opposite side having a clamping edge surface (621a,623a), the second support member (622) has an outer peripheral surface (622a) matched with an inner peripheral surface of the inner ring (613) of the bearing (61), and the two clamping edge surfaces (621 a,623a) and the outer peripheral surface (622a) commonly define the clamping portion (624).

5. The rear swing arm (30) for a motorcycle according to Claim 1, wherein each of the at least two support members (22) has one contact surface opposite to each other, each of the contact surfaces is formed with a hollow recessed portion (221d,222d), and the positioning portions (225) are a plurality of hole columns (221c,222c).

6. The rear swing arm (30) for a motorcycle according to Claim 1, wherein the transmission shaft (43) is a crankshaft (45) or an output shaft.

7. The rear swing arm (30) for a motorcycle according to Claim 1, wherein the swing housing (31) of the rear swing arm (30) is installed with a power transmission mechanism (36) therein, and the power transmission mechanism (36) is linked to one end of the transmission shaft (43).

8. The rear swing arm (30) for a motorcycle according to Claim 7, wherein the power transmission mechanism (36) is selected from at lease one of a belt type transmission mechanism, a chain type transmission mechanism, a gear type transmission mechanism and a shaft type transmission mechanism.

9. The rear swing arm (30) for a motorcycle according to Claim 7, wherein the rear swing arm (30) having the power transmission mechanism (36) is installed on a left side, a right side or both sides of a motorcycle.

10. The rear swing arm (30) for a motorcycle according to Claim 1, wherein each of the at least two support members (22) has a through hole (221 b,222b), and all of the through holes (221 b,222b) commonly define the pathway (224).

11. The rear swing arm (30) for a motorcycle according to Claim 1, wherein each of the at least two support members (22) has a plurality of positioning holes (221 c,222c), and all of the positioning holes (221 c,222c) commonly define the positioning portions (225).

12. The rear swing arm (30) for a motorcycle according to Claim 1, wherein the positioning members (23) are selected from screws.

## Patentansprüche

1. Ein hinterer Schwingenarm (30) für ein Motorrad, der ein Schwingengehäuse (31) mit einer hinteren Arm-Verbindungsstruktur (20) zum verschwenkbaren Verbinden des Schwingengehäuses (31) mit einem Kurbelgehäuse (41) eines Motors (40) aufweist, und der ein Lager (21) mit einem Außenring (211), der auf einer Lageraussparung (32) des Schwingengehäuses (31) montiert ist, und mit einem Innenring (213) aufweist, charakterisiert dadurch, dass die hintere Arm-Verbindungsstruktur (20) weiterhin aufweist:
wenigstens zwei Stützglieder (22), die gemeinsam einen Einspannbereich (223), einen Durchgang (224) und eine Vielzahl von Positionierbereichen (225) bestimmen, wobei der Einspannbereich (223) zwei Endflächen des Innenrings (213) des Lagers (21) fest einspannt, und wobei eine Antriebswelle (43) des Kurbelgehäuses (41) durch den Durchgang (224) berührungslos durchführbar ist, und wobei die Positionierbereiche (225) zwischen dem Einspannbereich (223) und dem Durchgang (224) ausgeformt sind;
und wobei zur Montage der Stützglieder (22) auf einer Verbindungswand (42) des Kurbelgehäuses (41) eine Vielzahl von Positioniergliedern (23) durch die jeweiligen Positionierbereiche (225) hindurchgehen, so dass das Schwingengehäuse (31) des hinteren Schwingenarms (30) verschwenkbar mit dem Kurbelgehäuse (41) des Motors (40) verbunden ist.

2. Der hintere Schwingenarm (30) für ein Motorrad gemäß Anspruch 1, wobei die wenigstens zwei Stützglieder (22) ein erstes Stützglied (221) und ein zweites Stützglied (222) aufweisen, wobei das erste und das zweite Stützglied (221, 222) jeweils eine Endfläche aufweisen, die zur Bildung eines Einspannflansches (221a, 222a) radial nach außen erweitert ist, und wobei die zwei Einspannflansche (221a, 222a) des ersten und des zweiten Stützgliedes (221, 222) gemeinsam den Einspannbereich (223) bestimmen.

3. Der hintere Schwingenarm (30) für ein Motorrad gemäß Anspruch 1, wobei die wenigstens zwei Stützglieder (52) ein erstes Stützglied (521) und ein zweites Stützglied (522) aufweisen, wobei das erste Stützglied (521) eine Endfläche oder äußere periphere Oberfläche aufweist, die zur Bildung eines Einspannflansches (521a) radial nach außen erweitert ist, und wobei das zweite Stützglied (522) eine Seite aufweist, die sich in der Nähe des ersten Stützglieds (512) befindet und die eine EinspannKantenfläche (522a) aufweist, wobei der Einspannflansch (521a) und die Einspann-Kantenfläche (522a) gemeinsam den Einspannbereich (523) bestimmen.

4. Der hintere Schwingenarm (30) für ein Motorrad gemäß Anspruch 1, wobei die wenigstens zwei Stützglieder (62) ein erstes Stützglied (621), ein zweites Stützglied (622) und ein drittes Stützglied (623) aufweisen, wobei das zweite Stützglied (622) zwischen den ersten und dritten Stützgliedern (621, 623) eingefasst ist, und wobei das erste und das zweite Stützglied (621, 623) jeweils eine gegenüberliegende Seite mit einer Einspann-Kantenfläche (621a,623a) aufweisen, wobei das zweite Stützglied (622) eine äußere periphere Oberfläche (622a) aufweist, die an eine innere periphere Oberfläche des Innenrings (613) des Lagers (61) angepasst ist, und wobei die zwei EinspannKantenflächen (621a, 623a) und die äußere periphere Oberfläche (622a) gemeinsam einen Einspannbereich (624) bestimmen.

5. Der hintere Schwingenarm (30) für ein Motorrad gemäß Anspruch 1, wobei jedes der wenigstens zwei Stützglieder (22) jeweils eine Kontaktfläche aufweist, wobei sich die Kontaktflächen gegenüberstehen und wobei jede der Kontaktflächen mit einem hohlen zurückgesetzten Bereich (221d, 222d) ausgeformt ist, und wobei die Positionierbereiche (225) durch eine Vielzahl von Lochholme (221c, 222c) gebildet werden.

6. Der hintere Schwingenarm (30) für ein Motorrad gemäß Anspruch 1, wobei die Antriebswelle (43) eine Kurbelwelle (45) oder eine Abtriebswelle ist.

7. Der hintere Schwingenarm (30) für ein Motorrad gemäß Anspruch 1, wobei das Schwingengehäuse (31) des hinteren Schwingenarms (30) mit einem darin vorgesehenen Kraftübertragungsmechanismus (36) montiert ist, und wobei der Kraftübertragungsmechanismus (36) mit einem Ende der Antriebswelle (43) verbunden ist.

8. Der hintere Schwingenarm (30) für ein Motorrad gemäß Anspruch 7, wobei der Kraftübertragungsmechanismus (36) aus wenigstens einem der folgenden Kraftübertragungsmechanismen ausgewählt ist: einem Riemen-Übertragungsmechanismus, einem Ketten-Übertragungsmechanismus, einem Zahnrad-Übertragungsmechanismus und einem Wellen-Übertragungsmechanismus.

9. Der hintere Schwingenarm (30) für ein Motorrad gemäß Anspruch 7, wobei der hintere Schwingenarm (30) mit dem Kraftübertragungsmechanismus (36) auf einer linken Seite, auf einer rechten Seite oder auf beiden Seiten des Motorrads montiert ist.

10. Der hintere Schwingenarm (30) für ein Motorrad gemäß Anspruch 1, wobei jedes der zwei Stützglieder (22) ein Durchgangsloch (221b, 222b) hat, und wobei sämtliche Durchgangslöcher (221b, 222b) gemeinsam den Durchgang (224) bestimmen.

11. Der hintere Schwingenarm (30) für ein Motorrad gemäß Anspruch 1, wobei jeder der wenigstens zwei Stützglieder (22) eine Vielzahl von Positionlöchern (221c, 222c) hat, wobei alle Positionierlöcher (221c, 222c) gemeinsam die Positionierbereiche (225) bestimmen.

12. Der hintere Schwingenarm (30) für ein Motorrad gemäß Anspruch 1, wobei die Positionierglieder (23) aus Schrauben ausgewählt sind.

## Revendications

1. Bras oscillant arrière (30) pour une motocyclette, avec un corps de base (31) comprenant une structure de joint de bras oscillant arrière (20) pour joindre de manière pivotante le corps de base (31) à un carter de moteur (41) d'un moteur (40), comprenant un roulement (21) avec une bague extérieure (211) qui est montée sur une cavité de roulement (32) du corps de base (31) et une bague intérieure (213),
**caractérisé en ce que** la structure de joint de bras oscillant arrière (20) comprend en outre:
au moins deux membres de support (22) qui définissent ensemble une zone de serrage (223), un passage (224) et
une pluralité de zones de positionnement (225), dans lequel la zone de serrage (223) serre étroitement deux surfaces d'extrémité de la bague intérieure (213) du roulement (21), le passage (224) permettant de passer un arbre d'entraînement (43) du carter de moteur (41) par le passage (224) sans contacter le même, et les zones de positionnement (225) étant formées entre la zone de serrage (223) et le passage (224); et une pluralité de membres de positionnement (23) qui passent par les zones de positionnement (225), respectivement, pour monter les membres de support (22) sur une paroi de liaison (42) du carter de moteur (41), afin que le corps de base (31) du bras oscillant arrière (30) soit joint de manière pivotante au carter de moteur (41) du moteur (40).

2. Le bras oscillant arrière (30) pour une motocyclette selon revendication 1, dans lequel les au moins deux membres de support (22) comprennent un premier membre de support (221) et un second membre de support (222), et dans lequel chacun des premier et second membres de support (221, 222) comprend une surface d'extrémité qui est étendue radialement vers l'extérieur pour former une bride de serrage (221a, 222a), et les deux brides de serrage (221a, 222a) des premier et second membres de support (221, 222) définissent ensemble la zone de serrage (223).

3. Le bras oscillant arrière (30) pour une motocyclette selon revendication 1, dans lequel les au moins deux membres de support (52) comprennent un premier membre de support (521) et un second membre de support (522), le premier membre de support (521) comprenant une surface d'extrémité ou surface extérieure périphérique qui est étendue radialement vers l'extérieur pour former une bride de serrage (521a), le second membre de support (522) comprenant un côté qui est proche au premier membre de support membre (521) et qui comprend une surface de bord de serrage (522a), et la bride de serrage (521a) et la surface de bord de serrage (522a) définissent ensemble la zone de serrage (523).

4. Le bras oscillant arrière (30) pour une motocyclette selon revendication 1, dans lequel les au moins deux membres de support (62) comprennent un premier membre de support (621), un second membre de support (622) et un troisième membre de support (623), le second membre de support (622) étant enserré entre les premier et troisième membres de support (621 ,623), chacun des premier et troisième membres de support (621 ,623) comprenant un côté opposé avec une surface de bord de serrage (621a, 623a), le second membre de support (622) comprenant une surface extérieure périphérique (622a) qui est adaptée à la surface intérieure périphérique de la bague intérieure (613) du roulement (61), et les deux surfaces de bord de serrage (621a, 623a) et la surface extérieure périphérique (622a) définissent ensemble la zone de serrage (624).

5. Le bras oscillant arrière (30) pour une motocyclette selon revendication 1, dans lequel chacun des au moins deux membres de support (22) a une surface de contact l'une opposée à l'autre, et chacune des surfaces de contact est formée avec une zone creuse et enfoncée (221 d, 222d), et les zones de positionnement (225) sont une pluralité de colonnes d'ouverture (221c, 222c).

6. Le bras oscillant arrière (30) pour une motocyclette selon revendication 1, dans lequel l'arbre d'entraînement (43) est un vilebrequin (45) ou un arbre de sortie.

7. Le bras oscillant arrière (30) pour une motocyclette selon revendication 1, dans lequel le corps de base (31) du bras oscillant arrière (30) est installé avec un mécanisme de transmission de puissance (36) dedans le même, et le mécanisme de transmission de puissance (36) est lié à un bout de l'arbre d'entraînement (43).

8. Le bras oscillant arrière (30) pour une motocyclette selon revendication 7, dans lequel le mécanisme de transmission de puissance (36) est sélectionné d'au moins une d'une transmission type courroie, une transmission type chaîne, une transmission type pignon et une transmission type arbre.

9. Le bras oscillant arrière (30) pour une motocyclette selon revendication 7, dans lequel le bras oscillant arrière (30) comprenant le mécanisme de transmission de puissance (36) est installé à un côté gauche, à un côté droit ou aux deux côtés de la motocyclette.

10. Le bras oscillant arrière (30) pour une motocyclette selon revendication 1, dans lequel chacun des au moins deux membres de support (22) a un trou débouchant (221b, 222b), et tous les trous débouchants (221b, 222b) définissent ensemble le passage (224).

11. Le bras oscillant arrière (30) pour une motocyclette selon revendication 1, dans lequel chacun des deux membres de support (22) comprend une pluralité de trous de positionnement (221c, 222c), et tous les trous de positionnement (221c, 222c) définissent ensemble les zones de positionnement (225).

12. Le bras oscillant arrière (30) pour une motocyclette selon revendication 1, dans lequel les membres de positionnement (23) sont sélectionnés de vis.
